# EUROPÄISCHE PATENTSCHRIFT

(11) **EP 0 606 876 B1**
(45) Veröffentlichungstag und Bekanntmachung des Hinweises auf die Patenterteilung: **11.09.1996**
(21) Anmeldenummer: 94100267.7
(22) Anmeldetag: 10.01.1994
(51) Int. Cl.: B60R 13/00, B60R 13/10

(54) **Halterung für ein Kennzeichenschild eines Fahrzeugs**
Holder for a vehicle number plate
Support pour plaque d'immatriculation

(30) Priorität: 11.01.1993 DE 9300229 U
(43) Veröffentlichungstag der Anmeldung: 20.07.1994
(73) Patentinhaber: Hepla-Kunststofftechnik GmbH, D-34576 Homberg (DE)
(72) Erfinder: Schwab, Jürgen, D-34576 Homberg (DE)
(74) Vertreter: Walther, Robert, Dipl.-Ing.

(56) Entgegenhaltungen:
- CH-A- 658 833
- DE-U- 8 223 840
- DE-U- 8 600 110
- DE-U- 8 634 651
- DE-U- 8 716 527
- DE-U- 8 912 546
- DE-U- 9 115 553
- DE-U- 9 205 976

## Beschreibung

Die Erfindung betrifft eine Halterung für ein Kennzeichenschild eines Fahrzeugs, insbesondere eines Kraftfahrzeugs, bestehend aus einer an dem Fahrzeug fixierbaren Platte mit einem in etwa der Kontur des Schildes nachempfundenen Rahmen, und mindestens einem Klemmelement zur Fixierung des Schildes, wobei das Klemmelement parallel zur Platte verschieblich von einer in dem Rahmen angeordneten Führungsnut aufgenommen wird, und wobei zur Verschiebung des Klemmelements ein Schubglied vorgesehen ist.

So ist beispielsweise aus dem DE-GM 92 05 976, der eine Halterung nach dem Oberbegriff des Anspruchs 1 beschreibt, eine Halterung für ein Kennzeichenschild bekannt, bei der unterhalb des Rahmens zur Aufnahme des Schildes eine horizontal verschiebliche Schiebelasche angeordnet ist, an der Stützelemente befestigt sind. Diese besitzen einen an dem Rahmen angreifenden Kopf, der über einen hinterschnittenen Hals an der Schiebelasche befestigt ist. Die Schiebelasche ist mit den Stützelementen zugeordneten Ausnehmungen versehen, durch welche die Stützelemente mit ihrem Hals durchgreifen. Dabei entspricht die Länge des Halses der Wanddecke der Deckleiste. Die praktisch über die gesamte Rahmenlänge reichende Schiebelasche ist mit mehreren Stützelementen versehen, die eine zuverlässige Abstützung des Tafelelementes gewährleisten. Die Ausnehmungen sind aus einem Durchsteck- und einem Haltefenster gebildet, wobei das Durchsteckfenster größer ist als der Kopf des Stützelementes und das Haltefenster kleiner ist als der Kopf des Stützelementes. Hierdurch kann die Schiebelasche im Bereich der Durchsteckfenster in den Rahmen gesteckt werden und durch horizontales Verschieben der Köpfe bis in die Haltefenster verriegelt werden, denn die Köpfe hinterschneiden die Haltefenster, so daß ein Entfernen der Schiebelasche nunmehr nicht möglich ist.

Nachteilig hieran ist, daß das Kennzeichenschild an zumindest zwei Stellen in den Rahmen eingefädelt werden muß. Damit dies gelingt, ist eine präzise Fertigung der einzelnen Teile notwendig, was sehr hohe Produktionskosten zur Folge hat. Darüber hinaus ist auch die Montage sehr aufwendig, da das Einfädeln der Schiebelasche sehr viel Geschick erfordert.

Der Erfindung liegt daher die Aufgabe zugrunde, eine Halterung für ein Kennzeichenschild zu schaffen, das preiswert in der Herstellung ist und eine einfache Montage zuläßt.

Erfindungsgemäß wird die Aufgabe dadurch gelöst, daß das Schubglied als zylindrischer Körper ausgebildet ist, der eine radiale Nut aufweist, wobei die Nut sich über einen Teil des Umfangs des zylindrischen Körpers erstreckt und einen exzentrischen Abschnitt zum verschieblichen Erfassen des Klemmelementes aufweist.

Hierdurch ist das Klemmelement parallel zur Platte verschieblich in einer in dem Rahmenholm angeordneten Führungsnut gehalten, wobei zur Verschiebung des Klemmelementes in Richtung des Schildes ein Schubglied vorgesehen ist. Hierbei sind die Klemmittel zur Fixierung des Kennzeichenschildes bei der Montage des Schildes mit der Halterung verbunden, was die Montage erheblich vereinfacht.

Im einzelnen ist das Schubglied als zylindrischer Körper ausgebildet, der von einer im Rahmenholm angeordneten entsprechenden Bohrung aufgenommen wird, wobei der zylindrische Körper eine radiale Nut aufweist, die sich nach einer vorteilhaften Ausbildung über einen Teil des Umfangs des zylindrischen Körpers erstreckt, so daß sich ein exzentrischer Abschnitt ergibt, durch den das Klemmelement erfaßt wird.

Das Klemmelement selbst besitzt eine Aussparung zur Aufnahme des exzentrischen Abschnittes, wobei die Größe der Aussparung kleiner als der Querschnitt des zylindrischen Körpers, aber größer als der Querschnitt des exzentrischen Abschnitts ist; vorzugsweise weist die Aussparung die Form eines Ovals auf. D.h., daß bei Drehung des zylindrischen Körpers, und somit bei Drehung des exzentrischen Abschnitts in der Aussparung des Klemmelements das Klemmelement in der Führungsnut parallel verschiebbar ist.

Hierdurch wird erreicht, daß das Klemmelement einmal auf das Kennzeichenschild zu und bei entsprechend gegenläufiger bzw. weiterer Drehung von dem Kennzeichenschild wegbewegt werden kann. Die Bewegung des Klemmelements in Richtung des Schildes ist derart, daß es das Schild zur Fixierung in der einen Endlage partiell überlappt.

Um die Montage zu ermöglichen, schließt sich an die Aussparung ein Schlitz an, dessen Breite in etwa dem Querschnitt des exzentrischen Abschnitts entspricht. Durch diesen Schlitz wird das Klemmelement in die Führungsnut eingeschoben, wobei hierbei der exzentrische Abschnitt mit seiner Schmalseite parallel zum Schlitz liegt.

Anhand der nachstehenden Zeichnungen ist die Ausführungsform beispielhaft näher erläutert.
- Fig. 1: zeigt eine Ausführungsform einer
Halterung für Kennzeichenschilder in einer
Draufsicht, wobei die Klemmelemente
verschiebbar im Rahmenholm angeordnet sind;
- Fig. 2: zeigt einen Schnitt gemäß der Linie VI-VI aus Fig. 1;
- Fig. 3: zeigt das Schubglied in einer Seitenansicht;
- Fig. 4: zeigt eine Draufsicht auf das Schubglied;
- Fig. 5: zeigt das Klemmelement in einer Draufsicht.

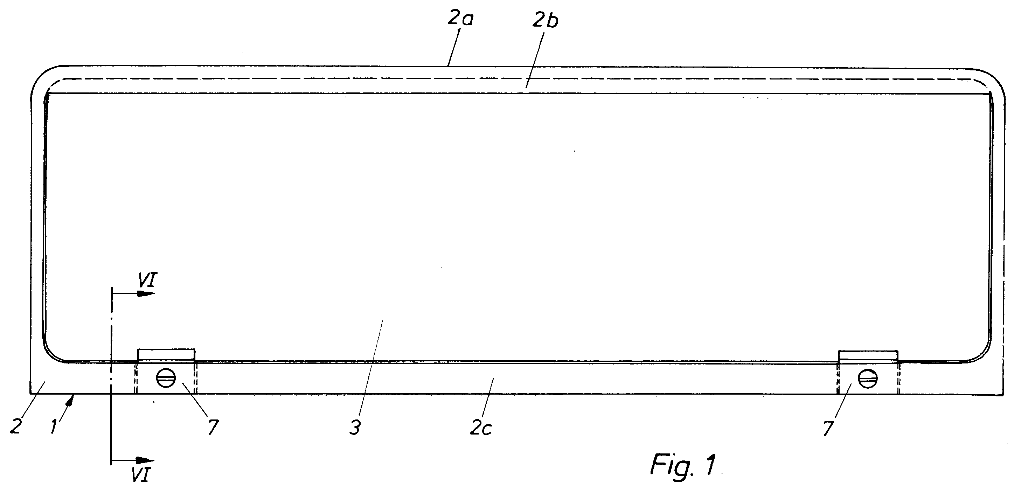

Bei der Ausführungsform einer Halterung für ein Kennzeichenschild gemäß der Fig. 1 bis 5 ist die am Fahrzeug fixierbare Platte jeweils mit 1 und der der Kontur des Schildes nachempfundene Rahmen insgesamt mit 2 bezeichnet. Der horizontal verlaufende obere Rahmenholm 2a besitzt die Nut 2b zur Aufnahme des Kennzeichenschildes 3.

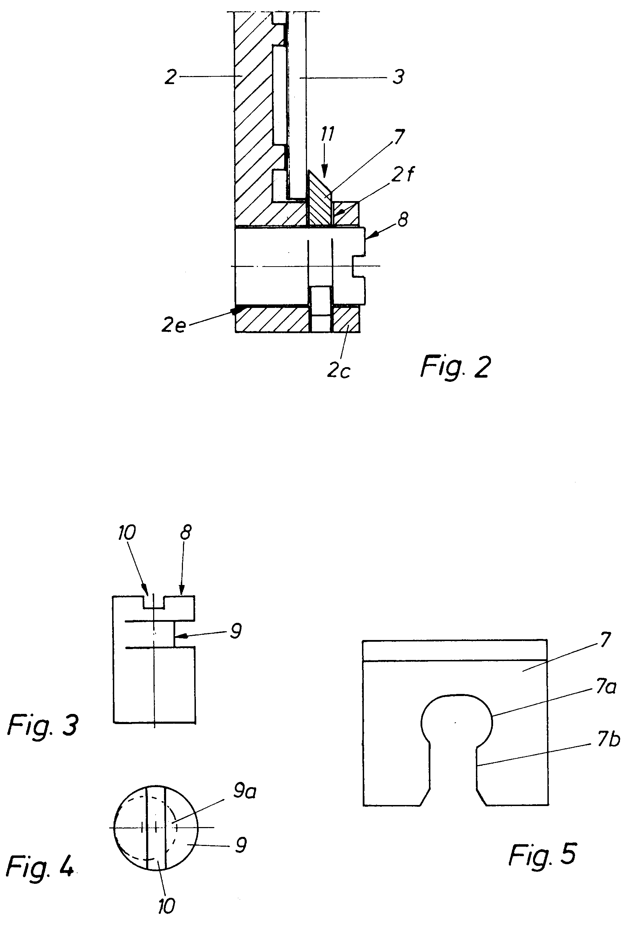

Bei der gemäß den Fig. 1 bis 5 dargestellten Ausführungsform ist das durch die Führungsnut 2f gehaltene Klemmelement jeweils mit 7 bezeichnet. Die genaue Ausgestaltung des Klemmelementes 7 ergibt sich aus den Fig. 2 bis 5; das Klemmelement 7 ist hierbei durch das Schubglied 8 in dem Rahmenholm 2c gehalten. Die Ausbildung des Schubgliedes 8 ergibt sich aus den Fig. 3 und 4 , wobei insbesondere aus Fig. 3 erkennbar ist, daß das Schubglied 8 ein im wesentlichen zylindrischer Körper ist, der eine radiale Nut 9 aufweist. Geführt ist das Schubglied 8 durch die Bohrung 2e im Rahmenholm 2c. Die Nut 9 ist jedoch nicht umlaufend ausgebildet, sondern erstreckt sich vielmehr nur über einen Teil des Umfangs des Schubgliedes 8, so daß sich ein exzentrischer Abschnitt 9a ergibt. Zur Drehung des Schubgliedes 8 befindet sich auf der Oberseite eine Nut 10 zum Ansatz eines Schraubendrehers. Im eingebauten Zustand des Klemmelementes 7 (Fig. 2), liegt die Nut 9 in der Aussparung 7a des Klemmelementes 7. An die nach Art eines Ovals ausgebildete Aussparung 7a schließt sich ein Schlitz 7b an. Die Montage des Klemmelementes 7 an dem Rahmenholm 2c erfolgt nun wie folgt:
Zunächst wird das Schubglied 8 in die Bohrung 2e des Rahmenholmes 2c eingeführt, bis die Nut 9a auf gleicher Höhe mit der Führungsnut 2f liegt. Alsdann wird das Schubglied 8 in die Stellung gemäß Fig. 4 gebracht, d. h., daß sich der exzentrische Abschnitt 9a fluchtend zum Schlitz 7b befindet. In dieser Stellung des Schubgliedes 8 wird das Klemmelement 7 in die Führungsnut 2f von oben (Pfeil 11) unter leichtem Druck eingeschoben, bis der exzentrische Abschnitt 9a in die Aussparung 7a einrastet. Bei Drehung des Schubgliedes 8 in die Stellung gemäß Fig. 2, erfolgt eine Verschiebung des Klemmelementes 7 entgegen der Richtung des Pfeiles 11,
wobei in der Endstellung des Klemmelementes 7 das Schild 3 von dem Klemmelement überlappt wird (Fig. 2). Bei entgegengesetzter Drehung des Schubgliedes 8 wird das Klemmelement 7 wieder in Richtung des Pfeiles 11 aus dem Bereich des Kennzeichenschildes 3 verschoben. In dieser Endstellung (nicht dargestellt) kann das Kennzeichenschild herausgenommen werden.

## Patentansprüche

1. Halterung für ein Kennzeichenschild eines Fahrzeugs, insbesondere eines Kraftfahrzeugs, bestehend aus einer an dem Fahrzeug fixierbaren Platte (1) mit einem in etwa der Kontur des Schildes (3) nachempfundenen Rahmen, und mindestens ein Klemmelement (7) zur Fixierung des Schildes (3), wobei das Klemmelement (7) parallel zur Platte (1) verschieblich von einer in dem Rahmen angeordneten Führungsnut (2f) aufgenommen wird, und wobei zur Verschiebung des Klemmelements (7) ein Schubglied (8) vorgesehen ist,
**dadurch gekennzeichnet,** daß das Schubglied (8) als zylindrischer Körper ausgebildet ist, der eine radiale Nut (9) aufweist, wobei die Nut (9) sich über einen Teil des Umfangs des zylindrischen Körpers (8) erstreckt, und einen exzentrischer Abschnitt (9a) zum verschieblichen Erfassen des Klemmelementes (7) aufweist.

2. Halterung nach Anspruch 1,
**dadurch gekennzeichnet,** daß das Klemmelement (7) eine Aussparung (7a) zur Aufnahme des exzentrischen Abschnitts (9a) aufweist, wobei die Größe der Aussparung (7a) kleiner als der Querschnitt des zylindrischen Körpers (8), aber großer als der Querschnitt des exzentrischen Abschnitts (9a) ist.

3. Halterung nach Anspruch 1,
**dadurch gekennzeichnet,** daß der zylindrische Körper (8) Mittel (10) zum Ansatz eines Werkzeugs aufweist.

4. Halterung nach Anspruch 1,
**dadurch gekennzeichnet,** daß zur Aufnahme des zylindrischen Körpers (8) der Rahmenholm (2c) eine entsprechende Bohrung (2e) aufweist.

5. Halterung nach Anspruch 2,
**dadurch gekennzeichnet,** daß sich die Aussparung (7a) an einen Schlitz (7b) anschließt, dessen Breite in etwa dem Querschnitt des exzentrischen Abschnitts (9a) entspricht.

## Claims

1. Holder for a number plate of a vehicle, especially a motor vehicle, consisting of a plate member (1), which is fixable at the vehicle, with a frame which is approximately related to the profile of the plate (3), and at least one clamping element (7) for the fixing of the plate (3), wherein the clamping element (7) is received by a guide groove (2f), which is arranged in the frame, to be displaceable parallelly to the plate member (1), and wherein a thrust member (8) is provided for displacement of the clamping element (7), characterised thereby that the thrust member (8) is constructed as a cylindrical body which has a radial groove (9), wherein the groove (9) extends over a part of the circumference of the cylindrical body (8), and has an eccentric portion (9a) for displacing engagement of the clamping element (7).

2. Holder according to claim 1, characterised thereby that the clamping element (7) has a recess (7a) for reception of the eccentric portion (9a), wherein the size of the recess (7a) is smaller than the cross-section of the cylindrical body (8), but larger than the cross-section of the eccentric portion (9a).

3. Holder according to claim 1, characterised thereby that the cylindrical body (8) has means (10) for the attachment of a tool.

4. Holder according to claim 1, characterised thereby that the frame bar (2c) has an appropriate bore (2e) for reception of the cylindrical body (8).

5. Holder according to claim 2, characterised thereby that the recess (7a) adjoins a slot (7b), the width of which approximately corresponds with the cross-section of the eccentric portion (9a).

## Revendications

1. Support de plaque d'immatriculation d'un véhicule, notamment d'un véhicule automobile, comportant une plaque (1) pouvant être fixée au véhicule, cette plaque ayant un cadre qui correspond approximativement au contour de la plaque (3) et au moins un élément de pincement (7) pour fixer la plaque (3), dans lequel l'élément de pincement (7) est parallèle à la plaque (1) coulissante dans une rainure de guidage (2f) ménagée dans le cadre, et dans lequel un élément de coulissement (8) est agencé pour assurer le coulissement de l'élément de pincement (7), **caractérisé en ce** que l'élément de coulissement (8) est constitué par un corps cylindrique pourvu d'une gorge radiale (9), cette gorge (9) s'étendant sur une partie de la périphérie du corps cylindrique, et présentant une entaille excentrique (9a) pour permettre la tenue en coulissement de l'élément de pincement (7).

2. Support selon la revendication 1,
**caractérisé en ce** que l'élément de pincement (7) comporte un évidement (7a) pour recevoir l'entaille excentrique (9a), les dimensions de l'évidement (7a) étant inférieures à la section du corps cylindrique (8), mais plus grand que la section de l'entaille excentrique (9a).

3. Support selon la revendication 1,
**caractérisé en ce** que le corps cylindrique (8) comporte des moyens (10) d'intervention au moyen d'un outil.

4. Support selon la revendication 1,
**caractérisé en ce** que le longeron (2c) du cadre comporte un alésage approprié (2e) pour recevoir le corps cylindrique (8).

5. Support selon la revendication 2,
**caractérisé en ce** que l'évidement (7a) est raccordé à une fente (7b) dont la largeur correspond sensiblement à la section transversale de l'entaille excentrique (9a).
